# FASCICULE DE BREVET EUROPEEN

(11) **EP 2 507 304 B1**
(45) Date de publication et mention de la délivrance du brevet: **04.09.2019**
(21) Numéro de dépôt: 10805452.9
(22) Date de dépôt: 24.11.2010
(51) Int. Cl.: C08J 3/22, C08J 3/24, C08J 5/18, C08K 5/3492, C08L 23/08, C08L 31/00, B32B 17/10, C08K 5/14

(54) **SYSTEME DE RETICULATION A HAUTE VITESSE**
HOCHGESCHWINDIGKEITSVERNETZUNGSSYSTEM
HIGH-SPEED CROSS-LINKING SYSTEM

(30) Priorité: 03.12.2009 FR 0958621
(43) Date de publication de la demande: 10.10.2012
(73) Titulaire: Arkema France, 92700 Colombes (FR)
(72) Inventeur: KEROMNES, Laurent, 69630 Chaponost (FR); DEVISME, Samuel, F-76000 Rouen (FR); CORFIAS-ZUCCALLI, Catherine, F-27500 Pont-audemer (FR)
(74) Mandataire: Gorintin, Sarah
(86) Numéro de dépôt international: PCT/FR2010/052498
(87) Numéro de publication internationale: WO 2011/067504

(56) Documents cités:
- EP-A1- 0 180 789
- EP-A1- 2 355 163
- EP-A2- 0 146 329
- WO-A1-99/27588
- GB-A- 1 195 214
- JP-A- 2006 036 875
- US-A- 5 447 576

## Description

### Domaine de l'invention

L'invention a pour objet un système de réticulation comprenant un peroxyde organique et un co-agent de réticulation. L'invention porte plus particulièrement sur une composition comprenant une polyoléfine et le système de réticulation ainsi que l'utilisation de cette composition comme encapsulant des cellules photovoltaïques.

### Etat de l'art

Les peroxydes organiques sont couramment utilisés pour la réticulation des résines thermoplastiques ou des élastomères, ces résines et élastomères étant regroupés dans la présente description sous le terme « polymères ». Pour réticuler un polymère, un peroxyde est généralement mélangé au polymère à réticuler dans une première étape, puis on réalise une seconde étape de mise en forme du polymère et une troisième étape de réticulation, par exemple par un traitement thermique.
A température ambiante, les peroxydes peuvent être sous forme liquide ou solide. Lorsque les peroxydes sont mélangés à ces polymères, ils sont mélangés à haute température, c'est-à-dire une température supérieure au point de ramollissement du polymère, par exemple par extrusion ou malaxage ; les peroxydes sont alors généralement sous une forme liquide.

Par ailleurs, les modules photovoltaïques comprennent des cellules sensibles à la lumière, dites « cellules photovoltaïques », qui sont capables de transformer la lumière en courant. Ces cellules sont protégées de leur environnement (humidité, oxygène, etc...) par des couches de protection inférieure et supérieure. Ces couches sont généralement en verre ou en polymère.
Une ou plusieurs couches de composition encapsulante, souvent appliquée sous forme de film, permettent d'assembler les cellules et les couches de protection. La composition encapsulante doit épouser parfaitement la forme de l'espace existant entre les cellules et les autres couches de protection du module et ceci afin d'éviter la présence d'air qui limite le rendement du module photovoltaïque.
Il est également avantageux que la composition soit suffisamment transparente à la lumière visible pour permettre un bon rendement des cellules photovoltaïques.
De plus, la couche de protection supérieure en verre ou en plastique transparent est placée au dessus de la couche de composition encapsulante. Or, le poids de cette couche de protection sur ce film peut être important : il est donc également préférable que la composition présente une bonne tenue au fluage afin que l'épaisseur de la couche soit conservée au fil du temps, ceci pour améliorer la durée de vie du module.
Cette composition encapsulante est généralement une composition comprenant un polymère, généralement un copolymère d'éthylène et d'acétate de vinyle, qui est réticulé par un peroxyde organique. Les différentes couches constitutives du panneau sont assemblées (cellules, couche(s) d'encapsulant comprenant le peroxyde, couches de protection) et le panneau ainsi assemblé subit une étape de cuisson permettant la réticulation de la couche d'encapsulant.
On peut se référer par exemple au Handbook of Photovoltaic Science and Engineering, Wiley, 2003 qui décrit le fonctionnement et la constitution des modules photovoltaïques.
Par ailleurs, un des problèmes rencontrés par les industriels de la fabrication des modules photovoltaïques est que cette étape de cuisson diminue le rendement du procédé de fabrication des modules. Un autre problème est également qu'il est avantageux de diminuer la température de l'étape de cuisson pour diminuer la consommation d'énergie nécessaire à la fabrication de modules photovoltaïques.
Pour réticuler le polymère, la composition comprenant le peroxyde est chauffée pour activer le peroxyde. Des bulles peuvent alors apparaître lors de cette activation. La présence nombreuse de ces bulles peut être un inconvénient dans la mesure où elles peuvent diminuer la transparence de la composition et empêcher la bonne encapsulation des cellules.

Le document EP 0 180 789 se rapporte à un procédé de réticulation du polystyrène. Le document WO 99/27588 concerne des encapsulants avec une décoloration minimisée, une stabilité photothermique et photochimique améliorée et présentant des concentrations de chromophore et de résidus de peroxyde réduites. Ce document ne propose par l'utilisation d'un co-agent de réticulation. Le document JP 2006036875 décrit un agent d'étanchéité pour cellules solaires consistant en une composition de copolymère éthylènique, mais utilise de peroxydes organiques différents de ceux de la présente invention, et le ratio massique de peroxyde organique et de co-agent de réticulation proposé est également différent.

Il est donc nécessaire de trouver de nouvelles solutions permettant d'améliorer les rendements des procédés de fabrication des modules photovoltaïques. C'est justement un des objets de la présente invention qui consiste en l'utilisation de peroxydes particuliers dans les modules photovoltaïques.

### Résumé de l'invention

Il est décrit un système de réticulation d'un copolymère éthylène et un monomère éthylénique portant une fonction polaire comprenant au moins :
▪ un peroxyde organique dont le temps de demi-vie à une température donnée choisie dans la gamme allant de 80°C à 115°C est égal à une heure ;
▪ et un co-agent de réticulation ;
le temps de demi-vie dudit peroxyde étant mesuré en le dissolvant dans le n-dodecane à une concentration de 0,2 mol/L.

L'utilisation de ce système est particulièrement avantageux car il permet, lorsqu'il est ajouté à une polyoléfine comprenant un comonomère polaire, la réticulation rapide de ce polymère. Lorsque ce polymère est utilisé en tant qu'encapsulant de modules photovoltaïques avec le système selon l'invention, les rendements des procédés de fabrication desdits modules sont excellents et le polymère ainsi réticulé présente des propriétés finales tout à fait adaptées à l'encapsulation des modules.

Le peroxyde peut par exemple être choisi parmi le 2-éthylperhexanoate de tert-butyle, le 2-éthylperhexanoate de tert-amyle, le 1,1-di-(tert-butylperoxy)-3.3.5-triméthylcyclohexane, le peroxyde de bisdécanoyle et le peroxyde de dilauroyle comme agent réticulant. Avantageusement, le peroxyde est le 2-éthylperhexanoate de tert-butyle.

Le co-agent, différent des peroxydes organiques, porte avantageusement au moins une fonction carbamate, maléimide, acrylate, méthacrylate ou allyle. Les carboxylates d'allyle peuvent être utilisés. Les co-agents peuvent être des composés de type allyle, diallyle et triallyle. Avantageusement, le co-agent de réticulation est choisi parmi le cyanurate de triallyle, l'isocyanurate de triallyle, le N,N' m-phénylène dimaléimide, le trimellitate de triallyle et le triméthylolpropane triméthacrylate, préférentiellement le cyanurate de triallyle.
Le co-agent est ici utilisé non pas pour accélérer la réticulation du polymère mais pour augmenter le taux de réticulation. Ce co-agent permet aussi de réduire le dégagement gazeux résiduel lors de la décomposition de ces mêmes peroxydes. Et in fine, réduire le nombre de bulles dans le film encaspulant.
Le ratio massique de peroxyde organique et de co-agent de réticulation est compris dans la gamme allant de 1 : 3 à 3 : 1.
Le système selon l'invention peut être utilisé pour la réticulation d'un copolymère éthylène et d'un comonomère éthylénique portant une fonction polaire.

L'invention a pour objet une composition comprenant au moins :
- un copolymère éthylène et un monomère éthylénique portant une fonction polaire, ce monomère comprenant préférentiellement de 3 à 20 atomes de carbone, préférentiellement de 4 à 8 atomes ; et
- un système de réticulation d'un copolymère éthylène et un monomère éthylénique portant une fonction polaire comprenant au moins :
   - un peroxyde organique dont le temps de demi-vie est égal à une heure pour une température quelconque choisie dans la gamme allant de 80°C à 115°C ;
   - et un co-agent de réticulation ;
   le temps de demi-vie dudit peroxyde étant mesuré en le dissolvant dans le n-dodécane à une concentration de 0,2 mol/L et dans lequel le ratio massique de peroxyde organique et de co-agent de réticulation est compris dans la gamme allant de 1 : 3 à 3 : 1..

Le monomère éthylénique peut être choisi parmi l'acétate de vinyle et les (méth)acrylates de méthyle, d'éthyle ou de butyle. Le copolymère de l'éthylène de la composition selon l'invention comprend préférentiellement de 10 à 60% en masse de monomère éthylénique portant une fonction polaire par rapport à la masse totale du copolymère, préférentiellement de 25 à 45% en masse.

La composition selon l'invention a une quantité en système de réticulation préférentiellement comprise, par rapport au poids total de la composition, dans la gamme allant de 0,1 à 10%, préférentiellement de 1 à 5%.

Un autre objet de l'invention est un film comprenant une composition selon l'invention.

L'invention a également pour objet l'utilisation de la composition ou d'un film selon l'invention comme encapsulant dans un module photovoltaïque.

L'invention porte également sur un procédé de fabrication d'une composition selon l'invention comprenant un stade de mélange du peroxyde organique, du co-agent de réticulation et du polymère, ce stade pouvant être réalisé en une ou plusieurs étapes.

Selon une version très avantageuse du procédé de fabrication de la composition selon l'invention, il comprend une étape de mélange d'un mélange-maître comprenant le peroxyde organique avec le polymère et le co-agent de réticulation.
Il est également décrit un mélange-maître comprenant :
▪ un polymère, préférentiellement un copolymère d'éthylène et d'un monomère éthylénique portant une fonction polaire ;
▪ et au moins un peroxyde organique choisi parmi les peroxydes ayant peroxyde organique dont le temps de demi-vie mesuré en le dissolvant dans le n-dodecane à une concentration de 0,2 mol/L est égal à une heure pour une température quelconque choisie dans la gamme allant de 80°C à 115°C, ce peroxyde étant préférentiellement choisi parmi le 2-éthylperhexanoate de tert-butyle, le 2-éthylperhexanoate de tert-amyle, le 1,1-di-(tert-butylperoxy)-3.3.5-triméthylcyclohexane, le peroxyde de bisdécanoyle et le peroxyde de dilauroyle ;
la quantité massique de peroxyde étant comprise dans la gamme allant de 5 à 30% par rapport au poids total du mélange-maître, préférentiellement de 7 à 16%.

Ce mélange-maître peut être avantageusement fabriqué par un procédé de fabrication comprenant :
a. une étape de mise en contact dudit peroxyde ;
b. une étape d'absorption du peroxyde par le polymère pour former un mélange-maître ;
c. une étape d'isolation dudit mélange-maître.

D'autres avantages de l'invention apparaîtront dans la description détaillée qui suit.

### Description détaillée de l'invention

Il est décrit un système de réticulation comprenant au moins :
▪ un peroxyde organique dont le temps de demi-vie à une température donnée choisie dans la gamme allant de 80°C à 115°C, préférentiellement de 90 à 105°C, est égal à une heure ;
▪ et un co-agent de réticulation ;
le temps de demi-vie dudit peroxyde étant mesuré en le dissolvant dans le n-dodecane à une concentration de 0,2 mol/L (TDV).

Le temps de demi-vie d'un peroxyde organique permet de déterminer sa vitesse de désintégration. Il est donné, pour une concentration dans un solvant, à une température et un temps donnés.
En utilisant un peroxyde présentant ce temps de demi-vie, on obtient un système de réticulation rapide et permettant de résoudre au moins un des problèmes de l'invention.

Préférentiellement, le peroxyde est choisi parmi le 2-éthylperhexanoate de tert-butyle (TDV=1h à 94°C), le 2-éthylperhexanoate de tert-amyle (TDV=1h à 92°C), le 1,1-di-(tert-butylperoxy)-3.3.5-triméthylcyclohexane (TDV=1h à 115°C) peroxyde de bisdécanoyle et le peroxyde de dilauroyle qui constituent, en association avec un co-agent, des systèmes de réticulation particulièrement performants en terme de vitesse et de taux de réticulation.

Un peroxyde forme lors de son activation des radicaux libres sur le polymère, ce qui permet la réticulation des chaînes du polymère, sans que le peroxyde s'intègre dans ces chaînes. Un co-agent de réticulation a un fonctionnement différent d'un peroxyde : en effet, il est activé à l'aide d'un initiateur de radicaux libres tel que les peroxydes organiques. Ainsi, activé lors de la dégradation du peroxyde, il forme alors des ponts de réticulation avec le polymère et est donc intégré dans la chaîne du polymère réticulé, contrairement aux peroxydes.
Le co-agent peut être monofonctionnel ou polyfoncionnel. Il porte avantageusement au moins une fonction carbamate, maléimide, acrylate, méthacrylate ou allyle. Ce sont des substances présentant avantageusement une masse molaire inférieure ou égale à 1000 g/mol, préférentiellement inférieure ou égale à 400 g/mol. Les carboxylates d'allyle peuvent être utilisés. Les co-agents peuvent être des composés de type allyle, diallyle et triallyle. Avantageusement, le co-agent de réticulation est choisi parmi le cyanurate de triallyle, l'isocyanurate de triallyle, le N,N' m-phénylène dimaléimide, le trimellitate de triallyle et le triméthylolpropane triméthacrylate, préférentiellement le cyanurate de triallyle.
Le système peut comprendre éventuellement un solvant organique. On peut utiliser tout type de solvant. Par exemple, on utilise des solvants de type alcane, aromatique, alcène, halogéné ou alcool. Préférentiellement les molécules de solvant comprennent de 1 à 12 atomes de carbone. A titre d'exemple de solvant, on peut citer le décane, le n-dodécane, le 2,4,4-triméthylepentène, le α-méthylestyrène, le trichloroéthylène, le toluène, le benzène, l'éthylebenzène, le (1-méthylethenyl)benzène, 2-éthylehexanol, l'isopropanol, l'alcool de t-butyle ou l'acétone. On peut utiliser également un mélange de solvants, par exemple un mélange des solvants listés ci-dessus. Préférentiellement, la quantité de solvant est inférieure ou égale à 25% de la masse totale du système, voire inférieure ou égale à 10%.

Le système peut être utilisé pour réticuler un polymère. Un autre objet de l'invention est une composition comprenant un polymère et le système de réticulation selon l'invention. Si le système de réticulation comprend un solvant, le solvant utilisé n'est préférentiellement pas un solvant du polymère à réticuler. Par solvant du copolymère, on entend une concentration en polymère supérieure ou égale à 0,05 g par mL de solvant lorsqu'on met en contact pendant une heure à 23°C 1g de copolymère par mL de solvant.

On entend par monomère éthylénique, un monomère comprenant une insaturation susceptible de réagir avec l'éthylène dans un procédé par voie radicalaire. Par fonction polaire, on entend une fonction présentant un moment dipolaire, tel que les fonctions amine, alcool, uréthane, acide, ester ou anhydride d'acide ou de diacide. Préférentiellement, la fonction polaire est une fonction acide, ester, anhydride d'acide ou de diacide.
Le monomère éthylénique portant une fonction polaire comprend préférentiellement de 3 à 20 atomes de carbone, préférentiellement de 4 à 8 atomes de carbone.
A titre d'exemple de copolymère, on peut citer les copolymères d'éthylène et d'un ester vinylique d'acide carboxylique, les copolymères d'éthylène et d'un acide carboxylique insaturé ou encore les copolymères d'éthylène et d'un acrylate et ou d'un méthacrylates d'alkyle, regroupés dans la présente demande sous le terme (méth)acrylate d'alkyle. Avantageusement, le monomère éthylénique peut être choisi parmi l'acétate de vinyle et les (méth)acrylates de méthyle, d'éthyle ou de butyle.
La quantité massique en monomère éthylénique par rapport à la masse totale du copolymère (a) peut être comprise dans la gamme allant de 1 à 70%, avantageusement de 10 à 60% et préférentiellement de 20 à 45%.
Selon l'invention, les quantités des différents monomères présents dans le copolymère (a) peuvent être mesurées par spectroscopie infrarouge en utilisant la norme ISO8985 (1998).
Pour fabriquer les polyoléfines, on peut utiliser les procédés connus dits de polymérisation radicalaire fonctionnant habituellement à des pressions entre 200 et 2 500 bars. Ces procédés sont mis en oeuvre industriellement en utilisant deux types principaux de réacteurs : un réacteur de type autoclave ou un réacteur de type tubulaire. Ces procédés de polymérisation sont connus de l'homme du métier et on peut utiliser par exemple les procédés décrits dans les documents FR2498609, FR2569411 et FR2569412. L'homme du métier sait dans quelles proportions utiliser chacun des monomères pour obtenir le copolymère (a) utilisé dans l'invention.
Ces copolymères sont commercialisés par la demanderesse sous la marque EVATANE® et LOTRYL®.

Le taux de réticulation du polymère est généralement quantifié par la mesure du taux de gel. Ce taux de gel peut être mesuré en utilisant la méthode A de la norme ASTM D2765-01 (2006). Avantageusement, le taux de gel du polymère est supérieur ou égal à 10, préférentiellement supérieur ou égal à 20, par exemple supérieur ou égal à 50.

La composition peut comprendre également des additifs ou des charges inorganiques. A titre d'exemple d'additif, on peut citer les plastifiants, les antioxydants ou agents anti-ozone, les agents antistatiques, les matériaux colorants, les pigments, les azurants optiques, les stabilisants thermiques, les stabilisants lumière, les retardateurs de flamme.

Des agents de couplage peuvent être avantageusement ajoutés afin d'améliorer le pouvoir d'adhérence sur un autre support de la composition (I) ou du polymère à réticuler. Il peut être organique, minéral et plus préférentiellement semi-minéral semi-organique. Parmi ceux-ci, on peut citer les titanates ou les silanes organiques, comme par exemple les monoalkyl titanates, les trichlorosilanes et les trialkoxysilanes. Préférentiellement, la quantité en agent de couplage est comprise dans la gamme allant de 0,05 à 5% en masse de la composition.
A titre de charges, on peut citer l'argile, la silice, le talc, les carbonates comme le carbonate de calcium, les silicates comme le silicate de sodium.

La composition selon l'invention peut prendre la forme d'un film. Le film selon l'invention qui comprend la composition présente préférentiellement une épaisseur allant de 50 à 2000 microns, par exemple de 100 à 1000 microns. Il peut être fabriqué par toutes les méthodes connues de fabrication de film. On peut fabriquer par exemple le film par extrusion de film, calandrage ou par pressage.

Un avantage de la composition ou du film selon l'invention est que le polymère de cette composition ou de ce film peut être réticulé par un procédé à plus basse température et/ou plus rapidement que les compositions de l'art antérieur, le polymère réticulé présentant également un très bon aspect, en particulier un faible nombre de bulles et une bonne tenue au fluage.
Toutes ces propriétés font que la composition et le film selon l'invention peuvent être très avantageusement utilisés en tant qu'encapsulant dans les modules photovoltaïques.

Un autre objet de l'invention est un procédé de fabrication de ladite composition qui comprend un stade de mélange des différents constituants. La composition peut être fabriquée par toutes les techniques adaptées à la fabrication de compositions thermoplastiques. En particulier, on peut citer les techniques classiques de mélange des thermoplastiques telles que le malaxage ou l'extrusion. Le mélange est avantageusement réalisé à une température supérieure à la température de ramollissement du polymère mesurée selon la norme ASTM E 28-99(2004). Préférentiellement, la température est également inférieure à la température de dégradation du peroxyde. Le stade de mélange du peroxyde organique, du co-agent de réticulation, des éventuels additifs et du polymère peut être réalisé en une ou plusieurs étapes, c'est-à-dire que le peroxyde, le co-agent de réticulation et les éventuels additifs peuvent être mélangés de manière simultanée ou successivement au polymère de la composition.
Selon un procédé préféré de fabrication de la composition, on réalise une étape de mélange d'un mélange-maître comprenant le peroxyde organique, le polymère et le co-agent de réticulation. Ce mélange-maître selon l'invention peut comprendre :
- un polymère ;
- et au moins un peroxyde organique choisi parmi les peroxydes ayant peroxyde organique dont le temps de demi-vie mesuré en le dissolvant dans le n-dodecane à une concentration de 0,2 mol/L est égal à une heure pour une température quelconque choisie dans la gamme allant de 80°C à 115°C, préférentiellement choisi parmi le 2-éthylperhexanoate de tert-butyle, le 2-éthylperhexanoate de tert-amyle, le 1,1-di-(tert-butylperoxy)-3.3.5-triméthylcyclohexane, le peroxyde de bisdécanoyle et le peroxyde de dilauroyle ;
la quantité massique de peroxyde étant comprise dans la gamme allant de 5 à 30% par rapport au poids total du mélange-maître, préférentiellement de 7 à 16%.
Ce mélange-maître présente un intérêt tout particulier : ces peroxydes particuliers étant particulièrement instables, il est avantageux de pouvoir les transporter, stocker et manipuler sous cette forme de mélange-maître. Ce mélange-maître permet une réticulation rapide et sans risques de polymères, en particulier de polyoléfines.

Comme polymère utile à la fabrication du mélange-maître selon l'invention, on peut utiliser les mêmes polymères que ceux déjà cités pour fabriquer la composition selon l'invention, y compris dans ses versions préférées.
Pour fabriquer ce mélange-maître, on peut également utiliser les mêmes techniques de fabrication déjà citées pour la fabrication de la composition, c'est-à-dire les techniques classiques de mélange des thermoplastiques.
Selon un mode avantageux du procédé de fabrication du mélange-maître selon l'invention, le procédé comprend les étapes suivantes :
a. une étape de mise en contact d'une solution dudit peroxyde avec le polymère à une température inférieure à la température de ramollissement du polymère mesurée selon la norme ASTM E 28-99(2004) ;
b. une étape d'absorption du peroxyde par le polymère pour former un mélange-maître ;
c. une étape d'isolation dudit mélange-maître.
Un avantage de ce procédé est qu'il peut être réalisé à une température inférieure à la température de ramollissement du polymère, contrairement aux procédés à l'état fondu. Lorsqu'on fabrique un mélange-maître comprenant ces peroxydes particuliers par les techniques de mélange des thermoplastiques, on peut observer un phénomène de réticulation prématuré. Ainsi, comme la température est inférieure avec ce procédé préféré, on limite le phénomène de réticulation prématurée du mélange-maître. Le mélange-maître ainsi obtenu par ce procédé préféré présente une plus grande transparence qu'un mélange-maître obtenu par les techniques classiques des thermoplastiques. L'invention porte donc également sur le mélange-maître obtenu par le procédé selon l'invention.
L'utilisation de ce mélange-maître permet une réticulation rapide de polymères déjà cités et permet la fabrication d'une composition ayant des propriétés finales tout à fait adaptées à l'encapsulation de cellules photovoltaïques. De plus, l'introduction de peroxyde organique par un mélange-maître est plus aisée que l'introduction directe de peroxyde liquide ou solide dans le polymère encapsulant.

Selon un mode avantageux du procédé selon l'invention, le polymère utilisé pour la fabrication du mélange-maître est sous forme de particules ayant un volume moyen de 1 à 1000 mm³, préférentiellement de 3 à 120 mm³. Par « particules », on entend des morceaux de polymère pouvant avoir tout type de géométrie, par exemple, sphérique, sphéroïdale ou cylindrique. Préférentiellement, au moins 90% en masse de ces particules ont un volume compris dans ces gammes préférées de volume.
Dans ce cas, on obtient directement le mélange-maître sous forme de particules. Il peut alors facilement être utilisé comme mélange-maître. En utilisant des particules ayant ce volume particulier, l'absorption du peroxyde par le copolymère est excellente et on observe peu d'agglomération entre les particules.

Selon une version du procédé préféré de fabrication du mélange-maître de l'invention, il existe plusieurs mises en contact ou une mise en contact continue du peroxyde avec le polymère, c'est-à-dire qu'il y a plusieurs injections ou une injection continue de la solution de peroxyde lors du procédé.
L'étape a) de mise en contact peut être réalisée dans tout type de récipient. Le récipient peut être laissé ouvert ou être clos après la mise en contact. Le récipient peut être fermé de manière étanche ou non. Préférentiellement, le récipient est fermé de manière étanche et est équipé d'une soupape
L'étape b) est une étape d'absorption sous agitation de la solution de peroxyde par le polymère. Préférentiellement, il s'agit d'une absorption totale. Par « absorption totale », on entend que le volume restant de peroxyde non absorbé dans le récipient après l'étape d'absorption est inférieur à 5%, préférentiellement inférieur à 2%, tout préférentiellement inférieur à 1%.
La durée de l'absorption est généralement comprise dans la gamme allant de 10 à 600 minutes, préférentiellement de 20 à 240 minutes.
L'étape d'absorption est réalisée sous agitation. Cette agitation peut être réalisée par tout système d'agitation, comme par exemple un système à pâle, à hélice, à vis ou à ultrasons ou dans un dispositif de type rotatif ou à tambour, tel qu'un sécheur.

Lors de la troisième étape du procédé, on isole le mélange-maître qui peut prendre la forme de particules de copolymère comprenant le peroxyde.
De manière optionnelle, on peut réaliser une étape de séchage des particules récupérées lors de la troisième étape, par exemple dans une étuve ou tout autre type de sécheur. Celle-ci est préférentiellement réalisée à une température inférieure à la température de décomposition du peroxyde de la composition.

Le mélange-maître peut être utilisé pour fabriquer la composition selon l'invention.
Selon un mode de réalisation, le polymère du mélange-maître est un copolymère d'éthylène et d'acétate de vinyle et le polymère de la composition à réticuler est un copolymère d'éthylène et d'acétate de vinyle.

La composition ou le film selon l'invention peut être utilisé pour encapsuler des cellules photovoltaïques.
Les cellules photovoltaïques qui peuvent être encapsulées peuvent être de tout type. Ces cellules peuvent être par exemple à base de silicium dopé, monocristallin ou polycristallin, en couche mince formées par exemple de silicium amorphe, de tellurure de cadnium, de disiléniure de cuivre-indium ou encore à base de matériaux organiques.
Les modules photovoltaïques ainsi formés comprennent préférentiellement une couche de protection avant et une couche de protection arrière.
La couche de protection avant a préférentiellement des propriétés de résistance à l'abrasion et au choc, est transparente et protège les capteurs photovoltaïques de l'humidité extérieure. Pour former cette couche, on peut citer le verre, le poly-méthacrylate de méthyle (PMMA) ou toute autre composition polymère réunissant ces caractéristiques.
La couche de protection arrière protège essentiellement le module de l'humidité. Elle peut comprendre du verre ou encore des polymères fluorés tels que le poly fluorure de vinyle (PVF) ou le poly fluorure de vinylidène (PVDF).

Pour assembler les différentes couches, on peut utiliser tous les types de techniques de pressage comme par exemple le pressage à chaud, le pressage sous vide ou le laminage, en particulier le laminage à chaud. Les conditions de fabrication seront aisément déterminées par l'homme du métier en ajustant la température et la pression à la température d'écoulement de la composition.

L'invention porte également sur un procédé de fabrication d'un module photovoltaïque comprenant les étapes :
- d'assemblage des couches de cellules photovoltaïques, de film(s) encapsulant et de couches protectrices, au moins un des films encapsulant étant un film selon l'invention ;
- de cuisson du module, préférentiellement à une température supérieure ou égale à la température de dégradation du peroxyde.
Pour fabriquer les modules photovoltaïques avec la composition ou le film selon l'invention, l'homme du métier peut également se référer par exemple au Handbook of Photovoltaic Science and Engineering, Wiley, 2003.

### Exemples

### Produits utilisés :

Pour formuler les exemples de mélanges-maîtres selon l'invention, on utilise les produits suivants :
Copolymère : Copolymère d'éthylène et d'acétate de vinyle comprenant 33% en masse d'acétate de vinyle par rapport à sa masse totale.
Peroxyde 1 : 2-éthylperhexanoate de tert-butyle.
Peroxyde 2 : peroxycarbonate de OO-tertbutyle et de O-(2-éthylhexyle). Co-agent de réticulation : cyanurate de triallyle.

### Composition des mélanges-maîtres :

Les mélanges-maîtres selon l'invention (MM 1) et comparatif (MM 2) présentent, par rapport à la masse totale du mélange-maître, les compositions suivantes :

| Produits | MM1 | MM2 |
|---|---|---|
| Copolymère (%) | 90 | 90 |
| Peroxyde 1 (%) | 10 | 0 |
| Peroxyde 2 (%) | 0 | 10 |

### Préparation des mélanges-maîtres :

On réalise une absorption sur les granulés de copolymère pour chacune des solutions de peroxyde.

On met en contact dans un agitateur à rouleaux le peroxyde organique (2,2kg) avec le copolymère (19,8kg) avec éventuellement l'agent de couplage et le co-agent de réticulation dans un récipient clos à 50°C, l'axe de rotation du cylindre étant horizontal, et agité par rotation du récipient à une vitesse de 10 tours par minute.

Une première moitié de la solution de peroxyde est injectée au début de l'absorption et une seconde moitié est ajoutée au bout de 30 minutes d'absorption.

On récupère les particules de polymère au bout des 120 minutes. L'absorption de la solution de peroxyde dans les particules est totale.

Les particules ont été dosées après lavage pendant une heure dans le n-heptane : la quantité de peroxyde dans le copolymère est de 10% en masse totale de la composition pour le MM1 et le MM2.

### Préparation des éprouvettes

Pour évaluer l'invention, on prépare des films d'un mélange des constituants, c'est-à-dire le Copolymère avec le mélange-maître MM1 ou MM2 et éventuellement un co-agent de réticulation. On réalise avant le mélange en extrudeuse un prémélange en sac des différents constituants. Les films sont réalisés ensuite en introduisant ce prémélange dans une extrudeuse Haake 1 bivis contra rotative équipée d'une filière film. Le profil de température de l'extrudeuse est: trémie 20°C - Zone1 : 75 -Zone 2 : 75 -Filière film : 75 °C, la vitesse de vis de 80 tr/mn. On obtient des films de 8 cm de largeur.

### Mesure des propriétés

On mesure le module élastique à l'aide d'un rhéomètre rotationel de type plan-plan à contrainte imposée de marque Anton Paar, modèle Physica MCR301.

On place un échantillon d'un film ayant une épaisseur de 0,5 mm environ et 25 mm de diamètre entre les deux plans parallèles qui sont chauffés par conduction.

La rotation oscillatoire du plan supérieur autour de l'axe longitudinal applique une déformation à l'échantillon placé entre les deux plans. Celui-ci répond à cette déformation en exerçant une contrainte. On mesure alors le couple à fournir pour maintenir la déformation.

On débute la manipulation à 70°C avec une montée en température de 5°C.min⁻¹ jusqu'à 150°C puis on impose une température palier à 150°C pendant 30 minutes. Durant tout le test, on mesure le module de déformation élastique G' en imposant une déformation de 0,2% à une fréquence de 1Hz (6,28 rad.s⁻¹), ce module diminuant lors de la fusion du copolymère puis augmentant lors de sa réticulation.

On définit le critère t₉₀, qui représente le temps mis pour atteindre 90% de la valeur finale de G'. La comparaison des t₉₀ permet ainsi de classer qualitativement la vitesse de réticulation des films formulés.

On relève également la valeur finale de G'.

On refait le même traitement thermique que précédemment sans appliquer de contrainte et on relève le nombre de bulles/ cm² (N) formé lors de la réticulation.

Les compositions des films et les résultats obtenus pour ces différentes compositions selon l'invention (EX1 à EX7) ou comparatifs (CP1 à CP3) sont regroupés dans le tableau suivant :

| Exemples | Peroxyde 1 | Peroxyde 2 | Copolymère | Co-agent | t90 (s) | G' final (MPa) | N | Présence de bulles |
|---|---|---|---|---|---|---|---|---|
| EX1 (Comparatif) | 1,6 | 0 | 98,4 | 0 | | | 7,1 | bulles |
| EX2 (Comparatif) | 1,6 | 0 | 97,9 | 0,5 | 780 | 2,30E+05 | | |
| EX3 | 1,6 | 0 | 97,4 | 1 | 804 | 2,87E+05 | | |
| EX4 | 1,6 | 0 | 96,9 | 1,5 | 824 | 3,19E+05 | 1,2 | pas de bulle |
| EX5 | 1,6 | 0 | 96,4 | 2 | 828 | 3,37E+05 | | |
| EX6 | 1,6 | 0 | 95,9 | 2,5 | 840 | 3,74E+05 | | |
| EX7 | 3 | 0 | 95 | 2 | 776 | 3,74E+05 | | |
| CP1 | 0 | 1,5 | 98,5 | 0 | 1404 | 3,20E+05 | 1,6 | pas de bulle |
| CP2 | 0 | 2 | 98 | 0 | 1392 | 4,46E+05 | | |
| CP3 | 0 | 3 | 97 | 0 | 1380 | 4,65E+05 | | |

Les essais montrent que le peroxyde selon l'invention (Peroxyde 1) permet une réticulation plus rapide de la composition. Ceci est particulièrement avantageux pour son utilisation en tant que composition encapsulante dans les modules photovoltaïques afin d'augmenter la productivité des modules photovoltaïques.

Les essais montrent également que l'on peut diminuer le nombre de bulles formées lors de la réticulation de la composition tout en augmentant encore la tenue mécanique de la composition réticulée. Ceci est également un avantage pour son utilisation en tant qu'encapsulant de cellules photovoltaïques.

## Revendications

1. Composition comprenant au moins :
- un copolymère éthylène et un monomère éthylénique portant une fonction polaire, ce monomère comprenant préférentiellement de 3 à 20 atomes de carbone, préférentiellement de 4 à 8 atomes ; et
- un système de réticulation d'un copolymère éthylène et un monomère éthylénique portant une fonction polaire comprenant au moins :
• un peroxyde organique dont le temps de demi-vie est égal à une heure pour une température quelconque choisie dans la gamme allant de 80°C à 115°C;
• et un co-agent de réticulation ;
le temps de demi-vie dudit peroxyde étant mesuré en le dissolvant dans le n-dodécane à une concentration de 0,2 mol/L et dans lequel le ratio massique de peroxyde organique et de co-agent de réticulation est compris dans la gamme allant de 1 : 3 à 3 : 1.

2. Composition selon la revendication 1 dans laquelle le peroxyde organique est choisi parmi le 2-éthylperhexanoate de tert-butyle, le 2-éthylperhexanoate de tert-amyle, le 1,1-di-(tert-butylperoxy)-3.3.5-triméthylcyclohexane, le peroxyde de bisdécanoyle et le peroxyde de dilauroyle.

3. Composition selon l'une des revendications précédentes dans laquelle le co-agent de réticulation est choisi parmi le cyanurate de triallyle, l'isocyanurate de triallyle, le trimellitate de triallyle et le triméthylolpropane triméthacrylate, préférentiellement le cyanurate de triallyle.

4. Utilisation du système de réticulation tel que défini selon l'une des revendications 1 à 3 pour la réticulation d'un copolymère éthylène et d'un comonomère éthylénique portant une fonction polaire.

5. Composition selon l'une quelconque des revendications 1 à 3 dans laquelle le monomère éthylénique est choisi parmi l'acétate de vinyle et les (méth)acrylates de méthyle, d'éthyle ou de butyle.

6. Composition selon l'une quelconque des revendications 1 à 3 ou 5, dans laquelle le copolymère comprend de 10 à 60% en masse de monomère éthylénique portant une fonction polaire par rapport à la masse totale du copolymère, préférentiellement de 25 à 45% en masse.

7. Composition selon l'une des revendications 1 à 3, 5 ou 6 dans laquelle la quantité en système de réticulation par rapport au poids total de la composition est comprise dans la gamme allant de 0,1 à 10%, préférentiellement de 1 à 5%.

8. Film comprenant une composition selon l'une des revendications 1 à 3 ou 5 à 7.

9. Utilisation de la composition selon l'une des revendications 1 à 3 ou 5 à 7 ou d'un film selon la revendication 8 comme encapsulant dans un module photovoltaïque.

10. Procédé de fabrication d'une composition selon l'une des revendications 1 à 3 ou 5 à 7 comprenant un stade de mélange du peroxyde organique, du co-agent de réticulation et du polymère, ce stade pouvant être réalisé en une ou plusieurs étapes.

11. Procédé de fabrication d'une composition selon la revendication 10 comprenant une étape de mélange d'un mélange-maître comprenant le peroxyde organique, du polymère et le co-agent de réticulation.

## Patentansprüche

1. Zusammensetzung, mindestens umfassend:
- ein Copolymer von Ethylen und einem ethylenischen Monomer mit einer polaren Funktion, wobei dieses Monomer vorzugsweise 3 bis 20 Kohlenstoffatome, vorzugsweise 4 bis 8 Atome, umfasst; und
- ein System zur Vernetzung eines Copolymers von Ethylen und einem ethylenischen Monomer mit einer polaren Funktion, mindestens umfassend:
▪ ein organisches Peroxid mit einer Halbwertszeit von einer Stunde für jede Temperatur im Bereich von 80 °C bis 115 °C;
▪ und ein Vernetzungscoagens;
wobei die Halbwertszeit des Peroxids durch Lösen in n-Dodecan in einer Konzentration von 0,2 mol/l gemessen wird und wobei das Massenverhältnis von organischem Peroxid und Vernetzungscoagens im Bereich von 1:3 bis 3:1 liegt.

2. Zusammensetzung nach Anspruch 1, wobei das organische Peroxid aus tert-Butyl-2-ethylperhexanoat, tert-Amyl-2-ethylperhexanoat, 1,1-Di(tert-butylperoxy)-3,3,5-trimethylcyclohexan, Bisdecanoylperoxid und Dilauroylperoxid ausgewählt ist.

3. Zusammensetzung nach einem der vorhergehenden Ansprüche, wobei das Vernetzungscoagens aus Triallylcyanurat, Triallylisocyanurat, Triallyltrimellitat und Trimethylolpropantrimethacrylat, vorzugsweise Triallylcyanurat, ausgewählt ist.

4. Verwendung des Vernetzungssystems gemäß einem der Ansprüche 1 bis 3 zur Vernetzung eines Copolymers von Ethylen und einem ethylenischen Comonomer mit einer polaren Funktion.

5. Zusammensetzung nach einem der Ansprüche 1 bis 3, wobei das ethylenische Monomer aus Vinylacetat und Methyl-, Ethyl- oder Butyl(meth)acrylat ausgewählt ist.

6. Zusammensetzung nach einem der Ansprüche 1 bis 3 oder 5, wobei das Copolymer 10 bis 60 Massen-% ethylenisches Monomer mit einer polaren Funktion, bezogen auf die Gesamtmasse des Copolymers, vorzugsweise 25 bis 45 Massen-%, umfasst.

7. Zusammensetzung nach einem der Ansprüche 1 bis 3, 5 oder 6, wobei die Menge an Vernetzungssystem, bezogen auf das Gesamtgewicht der Zusammensetzung, im Bereich von 0,1 bis 10 %, vorzugsweise von 1 bis 5 %, liegt.

8. Folie, umfassend eine Zusammensetzung nach einem der Ansprüche 1 bis 3 oder 5 bis 7.

9. Verwendung der Zusammensetzung nach einem der Ansprüche 1 bis 3 oder 5 bis 7 oder einer Folie nach Anspruch 8 als Verkapselungsmittel in einem Photovoltaikmodul.

10. Verfahren zur Herstellung einer Zusammensetzung nach einem der Ansprüche 1 bis 3 oder 5 bis 7, umfassend eine Stufe des Mischens des organischen Peroxids, des Vernetzungscoagens und des Polymers, wobei diese Stufe in einem oder mehreren Schritten durchgeführt werden kann.

11. Verfahren zur Herstellung einer Zusammensetzung nach Anspruch 10, umfassend einen Schritt des Mischens eines Masterbatch, der das organische Peroxid, Polymer und das Vernetzungscoagens umfasst.

## Claims

1. Composition comprising at least:
- an ethylene copolymer and an ethylene monomer bearing a polar functional group, this monomer preferably comprising from 3 to 20 carbon atoms, preferably from 4 to 8 atoms; and
- a system for the crosslinking of an ethylene copolymer and an ethylene monomer bearing a polar functional group comprising at least:
• one organic peroxide whose half-life is equal to one hour for any temperature chosen in the range from 80°C to 115°C;
• and one crosslinking coagent;
the half-life of said peroxide being measured by dissolving it in n-dodecane at a concentration of 0.2 mol/L and in which the ratio by mass of organic peroxide and crosslinking coagent is within the range from 1:3 to 3:1.

2. Composition according to Claim 1, in which the organic peroxide is chosen from tert-butyl 2-ethylperhexanoate, tert-amyl 2-ethylperhexanoate, 1,1-di- (tert-butylperoxy)-3,3,5-trimethylcyclohexane, bisdecanoyl peroxide and dilauroyl peroxide.

3. Composition according to any of the preceding claims, in which the crosslinking coagent is chosen from triallyl cyanurate, triallyl isocyanurate, triallyl trimellitate and trimethylolpropane trimethacrylate, preferably triallyl cyanurate.

4. Use of the crosslinking system as defined according to one of Claims 1 to 3, for the crosslinking of an ethylene copolymer and an ethylene comonomer bearing a polar functional group.

5. Composition according to any one of Claims 1 to 3, in which the ethylene monomer is chosen from vinyl acetate and methyl, ethyl or butyl (meth)acrylates.

6. Composition according to any one of Claims 1 to 3 or 5, in which the copolymer comprises from 10 to 60% by mass of ethylene monomer bearing a polar functional group relative to the total mass of the copolymer, preferably from 25 to 45% by mass.

7. Composition according to one of Claims 1 to 3, 5 or 6, in which the quantity of crosslinking system is within, relative to the total weight of the composition, the range from 0.1 to 10%, preferably from 1 to 5%.

8. Film comprising a composition according to one of Claims 1 to 3 or 5 to 7.

9. Use of the composition according to one of Claims 1 to 3 or 5 to 7 or of a film according to Claim 8, as encapsulant in a photovoltaic module.

10. Process for the manufacture of a composition according to one of Claims 1 to 3 or 5 to 7, comprising a stage for mixing the organic peroxide, the crosslinking coagent and the polymer, it being possible for this stage to be carried out in one or more steps.

11. Process for the manufacture of a composition according to Claim 10, comprising a step for mixing a master batch comprising the organic peroxide, polymer and the crosslinking coagent.
